# EUROPEAN PATENT SPECIFICATION

(11) **EP 3 352 162 B1**
(45) Date of publication and mention of the grant of the patent: **10.03.2021**
(21) Application number: 18150267.5
(22) Date of filing: 04.01.2018
(51) Int. Cl.: G09G 3/34, G09G 3/36

(54) **DISPLAY SYSTEM WITH AUTOMATIC BRIGHTNESS ADJUSTMENT**
ANZEIGESYSTEM MIT AUTOMATISCHER HELLIGKEITSANPASSUNG
SYSTÈME D'AFFICHAGE AVEC RÉGLAGE AUTOMATIQUE DE LA LUMINOSITÉ

(30) Priority: 19.01.2017 CN 201710043194
(43) Date of publication of application: 25.07.2018
(73) Proprietor: BenQ Corporation, Taipei 114 (TW)
(72) Inventor: Wu, Ho-Shih, 114 Taipei (TW); Lin, Hsin-Nan, 114 Taipei (TW)
(74) Representative: Straus, Alexander

(56) References cited:
- EP-A2- 1 251 482
- US-A1- 2009 167 789
- US-A1- 2009 237 423
- US-A1- 2011 074 803
- US-A1- 2014 049 527

## Description

### Field of the Invention

The present invention is related to a display system with automatic brightness adjustment based on ambient light parameter and overall brightness.

### Background of the Invention

Computer vision syndrome (CVS) is a condition resulting from focusing the eyes on a computer or other display devices for protracted, uninterrupted periods of time. Some symptoms of CVS include headaches, blurred vision, neck pain, fatigue, eye strain, dry eyes, irritated eyes, double vision, and vertigo/dizziness.

When using a display device in indoor or other poor-lit environment, a lamp may typically be used as an extra light source in a prior display system. When the lamp is too bright, the screen of the display device may result in glare which further aggravates CVS symptoms. The luminance of the lamp may also change the color of display images which lowers the display quality. In the prior display system, the user needs to repeatedly adjust the brightness and color of the lamp and the screen for a given application, and a luminometer and a colorimeter are required in order to monitor the result of each adjustment, thus causing inconvenient user experiences.

US Patent publication No. US 2009167789 A1 teaches systems and methods for selecting a display source light illumination level. Aspects of some embodiments also comprise methods and systems for temporal filtering of a display source light illumination level.

US Patent publication No. US 20110074803 A1 teaches systems and methods for determining image content characteristics, determining ambient illumination conditions, selecting an initial backlight level based on the image content characteristics and selecting a backlight compensation process to be applied to the image based on the initial backlight level.

US Patent publication No. US 20140049527 A1 teaches a display device which includes a display screen, a pixel layer, a backlight, and at least one ambient light sensor which detects ambient light around the display device. An Optimal Power and Color Adjustment Module (OPCAM) receives detected ambient light information, identifies characteristics of the ambient light, including brightness and color temperature, selects a pre-calculated combination of power level and color details that collectively enables pre-determined acceptable display quality of images displayed on the display screen within the particular viewing space, and respectively forwards the pre-calculated power level and color details to concurrently trigger the backlight drive current controller and the pixel layer controller to provide a specific amount of drive current to the backlight and specific color characteristics, including an amount of color intensity of the pixel layer, which collectively yields the pre-determined display image quality, while optimizing power usage by the display device.

European Patent No. EP 1251482 A2 teaches an image-quality adjustment system for a liquid-crystal projector configured to detect the brightness and color of ambient light, or detect the brightness and color of the surface onto which the liquid-crystal projector projects an image. The image signal is automatically adjusted according to the detected brightness and color. For example, the brightness, contrast, and color balance of the image signal may be adjusted. The intensity of the lamp in the liquid-crystal projector may also be adjusted. A clear and natural image can thus be projected without the need for manual adjustments.

US Patent publication No. US 20090237423 A1 teaches a display apparatus capable of adjusting gamma and brightness based on ambient light and its display adjustment method. The display apparatus is adjusted to display an image output signal based on an image input signal and the correlated color temperature and brightness of an ambient light. The display apparatus includes a plurality of light sensing circuits, a memory unit, an image processing module, and a display module. The light sensing circuit senses the ambient light to produce a digital ambient color temperature index value. The memory unit stores a lookup table of brightness expression rates and gamma adjustment parameters corresponding to different color temperature index values. The image processing module produces a gamma adjustment parameter by a lookup table based on the color temperature index value and generates the gamma expression rate of the image input signal. The image processing module adjusts the image input signal to generate the image output signal based on the gamma adjustment parameter. The display module displays the image output signal.

### Summary of the Invention

The present invention aims at providing a display system with automatic brightness adjustment based on ambient light parameter and overall brightness.

This is achieved by a display system with automatic brightness adjustment according to the appended claims.

### Brief Description of the Drawings

In the following, the invention is further illustrated by way of example, taking reference to the accompanying drawings.
FIG. 1 is a functional diagram illustrating a display system with automatic brightness adjustment according to an embodiment of the present invention.

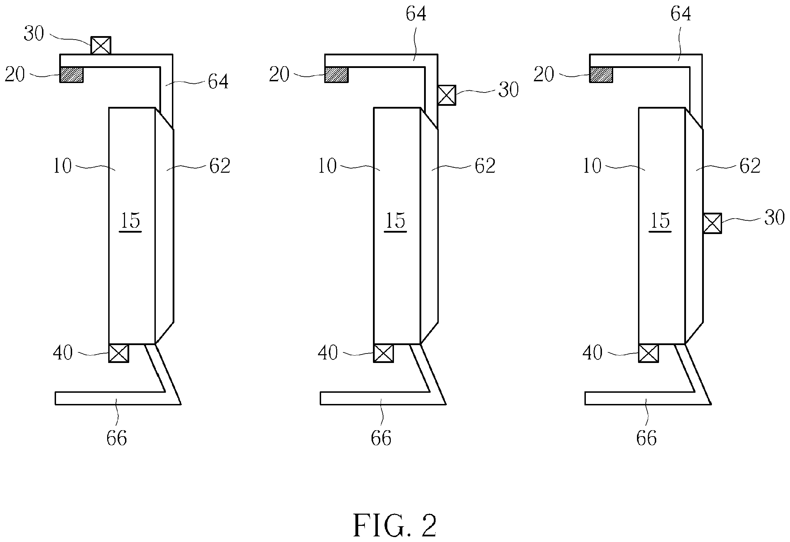

FIG. 2 is a diagram illustrating the arrangement of the lamp and the optical sensors in a display system according to an embodiment of the present invention.
FIG. 3 is a flowchart illustrating the operation of a display system according to an embodiment of the present invention.
FIG. 4 is a diagram illustrating the operation of adjusting the display parameter of the screen according to the ambient parameter.
FIG. 5 is a diagram illustrating the operation of adjusting the luminance parameter of the lamp according to the overall brightness.
FIG. 6 is a diagram illustrating the operation of adjusting the display parameter of the screen and the luminance parameter of the lamp according to the ambient parameter and the overall brightness.

### Detailed Description

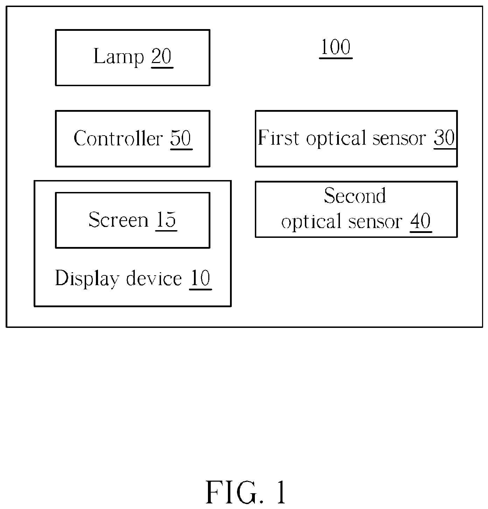

FIG. 1 is a functional diagram illustrating a display system 100

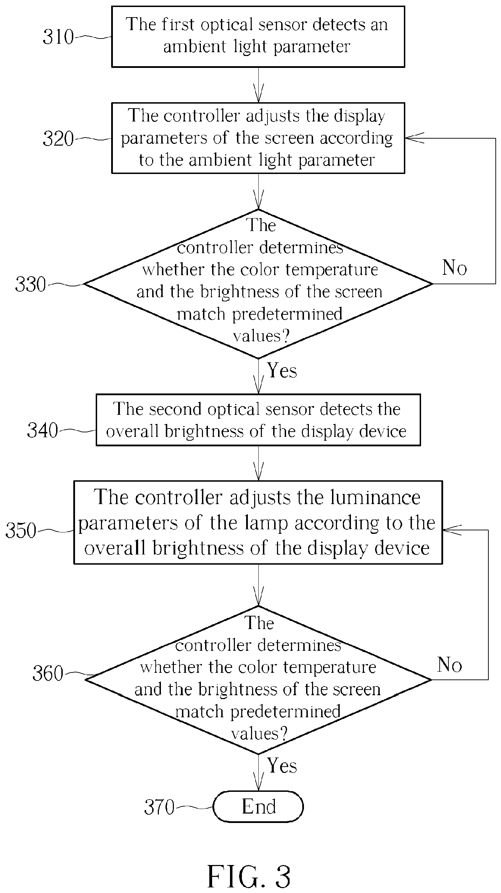

FIG. 3 is a flowchart illustrating the operation of the display system 100 according to an embodiment of the present invention. The flowchart in FIG. 3 includes the following steps:

| | |
|---|---|
| Step 310: | the first optical sensor 30 detects an ambient light parameter; execute 320. |
| Step 320: | the controller 50 adjusts the display parameters of the screen 15 according to the ambient light parameter; execute 330. |
| Step 330: | the controller 50 determines whether the color temperature and the brightness of the screen 15 match predetermined values; if yes, execute 340; if no, execute 320. |
| Step 340: | the second optical sensor 40 detects the overall brightness of the display device 10; execute 350. |
| Step 350: | the controller 50 adjusts the luminance parameters of the lamp 20 according to the overall brightness of the display device 10; execute 360. |
| Step 360: | the controller 50 determines whether the color temperature and the brightness of the screen 15 match predetermined values; if yes, execute 370; if no, execute 350. |
| Step 370: | end. |

In the present invention, the first optical sensor 30 is an ambient light sensor capable of detecting an ambient light parameter in step 310, such as detecting an ambient light luminance when the lamp 20 is turned on.

In step 320, the controller 50 is configured to adjust the display parameters of the screen 15 according to the ambient light parameter, such as adjusting the brightness and color temperature of the screen 15 according to the ambient light luminance. Then in step 330, the controller 50 is configured to determine whether the color temperature and the brightness of the screen 15 match predetermined values. More specifically, the controller 50 is configured to acquire an ambient light color temperature according to the ambient light luminance, adjust the brightness of the screen 15 according to the ambient light luminance, and adjust the color temperature of the screen 15 according to the ambient light color temperature. As previously stated, when the lamp 20 is too bright, the screen 15 may result in glare which further aggravates CVS symptoms. The luminance of the lamp 15 may also change the color of display images which lowers the display quality. the screen 15 may cause glare or change the color of images, thus lowering the display quality. In steps 310-330, the present invention can guarantee that the color temperature and the brightness of the screen 15 match predetermined values when the lamp 20 provides specific brightness and color temperature.

In step 350, the controller 50 is configured to adjust the luminance parameter of the lamp 20 according to the overall brightness of the display device 10, such as adjusting the brightness and/or color temperature of the lamp 20. Then in step 360, the controller 50 is configured to determine whether the color temperature and the brightness of the screen 15 match predetermined values. More specifically, the controller 50 is configured to acquire an overall light color temperature according to the overall light luminance, adjust the brightness of the lamp 20 according to the overall brightness, and adjust the color temperature of the lamp 20 according to the overall light color temperature.

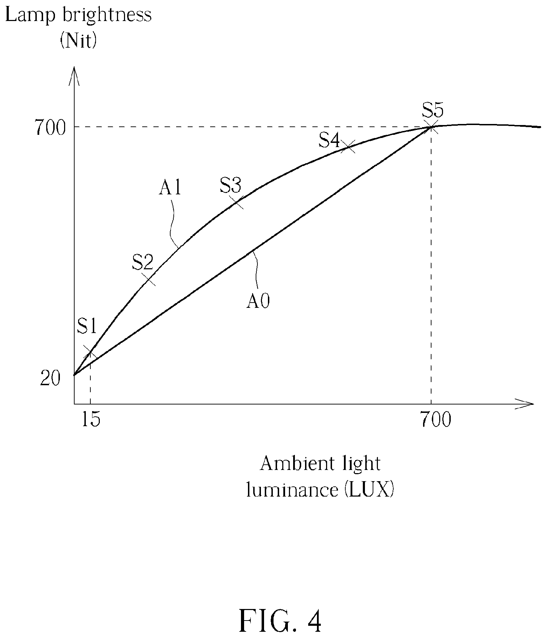

FIGs. 4-6 are diagrams illustrating the operation of adjusting the display parameter of the screen 15 according to the overall brightness. In FIG. 4, the vertical axis represents the brightness of the lamp 20 in Nit, and the horizontal axis represents the ambient light luminance in LUX. Curve A0 is a linear curve representing a default level of ambient light luminance corresponding to each dimming location. For illustrative purpose, it is assumed that the display system 100 adopts a 5-location dimming represented by S1-S5. As depicted in FIG. 4, curve A1 represents the operation of the controller 50 when adjusting the brightness of the lamp 20 according to the ambient light luminance.

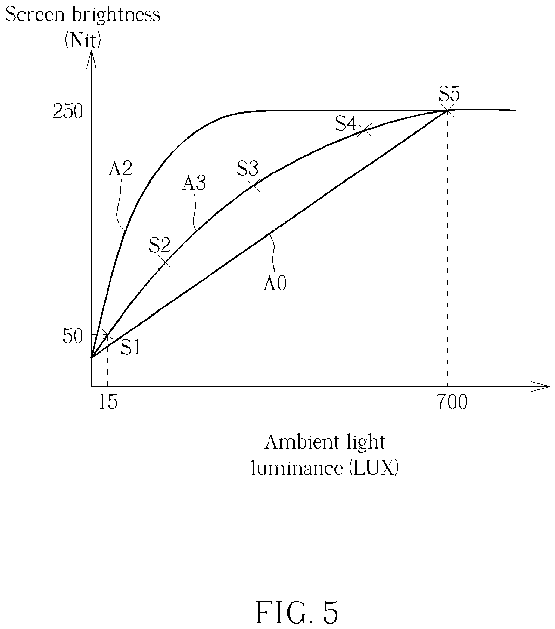

In FIG. 5, the vertical axis represents the brightness of the screen 15 in Nit, and the horizontal axis represents the ambient light luminance in LUX. Curve A0 is a linear curve representing a default level of ambient light luminance corresponding to each dimming location. Curve A2 is an exponential curve representing a default level of screen brightness corresponding to each dimming location for a given application. For illustrative purpose, it is assumed that the present display system 100 adopts a 5-location dimming represented by S1-S5. As depicted in FIG. 5, curve A3, whose value is between the exponential curve A2 and the linear curve A0, represents the operation of the controller 50 when adjusting the brightness of the screen 15 according to the overall brightness.

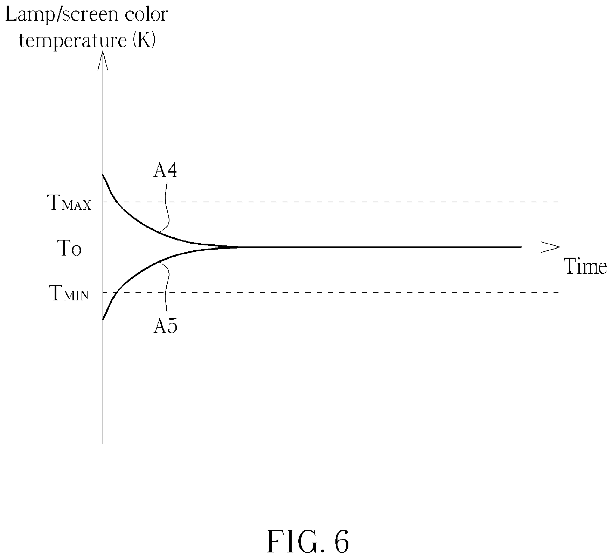

In FIG. 6, the vertical axis represents the color temperature of the lamp 20/screen 15 in K, the horizontal axis represents time, T₀ represents the target color temperature, T_{MAX} represents the maximum value within the ideal color temperature range, and T_{MIN} represents the minimum value within the ideal color temperature range. Curve A4 and curve A5 represent the operation of the controller 50 when adjusting the color temperature of the lamp 20 and the screen 15 according to the ambient light luminance and the overall brightness. As depicted by curve A4, when the initial color temperature of the lamp 20/screen 15 exceeds the maximum value T_{MAX} within the ideal color temperature range, the controller 50 is configured to gradually lower the color temperature of the lamp 20/screen 15 for reaching the target color temperature T₀. As depicted by curve A5, when the initial color temperature of the lamp 20/screen 15 does not exceed the minimum value T_{MIN} within the ideal color temperature range, the controller 50 is configured to gradually raise the color temperature of the lamp 20/screen 15 for reaching the target color temperature T₀.

In an comparative example not forming part of the present invention, the controller 50 is configured to adjust the display parameter of the screen 15 according to the ambient light parameter, then adjust the luminance parameter of the lamp 20 according to the ambient light parameter, and then adjust the display parameter of the screen 15 according to the overall brightness. In another comparative example not forming part of the present invention, the controller 50 is configured to adjust the luminance parameter of the lamp 20 according to the ambient light parameter, then adjust the display parameter of the screen 15 according to the ambient light parameter, and then adjust the display parameter of the screen 15 according to the overall brightness.

In the display system according to another comparative example not forming part of the controller is configured to adjust the luminance parameter of the lamp according to the ambient light parameter detected by the first optical sensor, and then adjust the display parameter of the screen according to the overall brightness detected by the second optical sensor. Therefore, the present invention can guarantee that the color temperature and the brightness of the screen and the overall brightness of the display system match predetermined values when the lamp provides specific brightness and color temperature, thereby providing high display quality and comfortable viewing experience.

## Claims

1. A display system (100) with automatic brightness adjustment, comprising:
a display device (10) having a screen (15);
a lamp (20) disposed above the screen (15) and configured to provide the screen (15) with an extra light source in addition to ambient light;
a first optical sensor (30) configured to detect an ambient light luminance when the lamp (20) is turned on, wherein the first optical sensor (30) is disposed at a location which is unaffected by luminance of the lamp (20);
a second optical sensor (40) configured to detect an overall brightness of the display device (10), wherein the second optical sensor (40) is disposed on the display device (10); and
**characterized by:**
a controller (50) configured to:
acquire the ambient light luminance from the first optical sensor (30);
adjust brightness and color temperature parameters of the screen (15) according to the acquired ambient light luminance;
determine whether a brightness and a color temperature of the screen (15) match predetermined values, and, if not so, repeat said adjusting and determining until the brightness and the color temperature of the screen (15) match said predetermined values;
in response to determining that the brightness and the color temperature of the screen (15) match said predetermined values: the overall brightness from the second optical sensor (40);
adjust brightness and color temperature parameters of the lamp (20) according to the acquired overall brightness; and
determine whether the brightness and the color temperature of the screen (15) match predetermined values, and, if not so, repeat said adjusting of the lamp and determining until the brightness and the color temperature of the screen (15) match said predetermined values.

2. The display system (100) of claim 1, **further characterized by**:
a detachable holder (64) disposed at a location on the display device (10) for containing the lamp (20) and the first optical sensor (30) wherein the location of the first optical sensor (30) on the detachable holder (64) is unaffected by luminance of the lamp (20).

## Patentansprüche

1. Anzeigesystem (100) mit automatischer Helligkeitsanpassung, welches umfasst:
eine Anzeigeeinrichtung (10) mit einem Bildschirm (15);
eine Lampe (20), die über dem Bildschirm (15) angeordnet und ausgestaltet ist, dem Bildschirm (15) eine Extralichtquelle zusätzlich zum Umgebungslicht bereitzustellen;
einen ersten optischen Sensor (30), der ausgestaltet ist, eine Umgebungslichtbeleuchtung zu erfassen, wenn die Lampe (20) angeschaltet ist, worin der erste optische Sensor (30) an einem Ort vorgesehen ist, der durch die Beleuchtung der Lampe (20) nicht betroffen ist;
einen zweiten optischen Sensor (40), der ausgestaltet ist, eine Gesamthelligkeit der Anzeigeeinrichtung (10) zu erfassen, worin der zweite optische Sensor (40) auf der Anzeigeeinrichtung (10) vorgesehen ist; und
**gekennzeichnet durch**:
eine Steuerung (50), die ausgestaltet ist:
die Umgebungslichtbeleuchtung von dem ersten optischen Sensor (30) zu erhalten;
Helligkeits- und Farbtemperaturparameter des Bildschirms (15) entsprechend der erhaltenen Umgebungslichtbeleuchtung anzupassen;
zu bestimmen, ob eine Helligkeit und eine Farbtemperatur des Bildschirms (15) mit bestimmten Werten übereinstimmt, und wenn dies nicht so ist, das Anpassen und Bestimmen zu wiederholen, bis die Helligkeit und die Farbtemperatur des Bildschirms (15) mit den bestimmten Werten übereinstimmt;
als Reaktion auf das Bestimmen, dass die Helligkeit und die Farbtemperatur des Bildschirms (15) mit den bestimmen Werten übereinstimmt:
die Gesamthelligkeit von dem zweiten optischen Sensor (40) zu erhalten;
die Helligkeits- und Farbtemperaturparameter der Lampe (20) entsprechend der erhaltenen Gesamthelligkeit anzupassen; und
zu bestimmen, ob die Helligkeit und die Farbtemperatur des Bildschirms (15) mit den bestimmten Werten übereinstimmt, und wenn dies nicht so ist, das Anpassen der Lampe und das Bestimmen zu wiederholen, bis die Helligkeit und die Farbtemperatur des Bildschirms (15) mit den bestimmten Werten übereinstimmt.

2. Anzeigesystem (100) nach Anspruch 1, welches weiter **gekennzeichnet ist durch**:
einen entfernbaren Halter (64), der zum Aufnehmen der Lampe (20) und des ersten optischen Sensors (30) an einem Ort auf der Anzeigeeinrichtung (10) vorgesehen ist, worin der Ort des ersten optischen Sensors (30) auf dem entfernbaren Halter (64) **durch** die Beleuchtung der Lampe (20) nicht betroffen ist.

## Revendications

1. Système d'affichage (100) à ajustement automatique de luminosité, comprenant :
un dispositif d'affichage (10) présentant un écran (15) ;
une lampe (20) disposée au-dessus de l'écran (15) et conçue pour fournir à l'écran (15) une source de lumière supplémentaire en plus de la lumière ambiante ;
un premier capteur optique (30) conçu pour détecter une luminance de lumière ambiante lorsque la lampe (20) est allumée, le premier capteur optique (30) étant disposé en un emplacement qui n'est pas influencé par la luminance de la lampe (20) ;
un deuxième capteur optique (40) conçu pour détecter une luminosité globale du dispositif d'affichage (10), le deuxième capteur optique (40) étant disposé sur le dispositif d'affichage (10) ; et
**caractérisé par** :
un dispositif de commande (50) conçu pour :
acquérir la luminance de lumière ambiante à partir du premier capteur optique (30) ;
ajuster les paramètres de luminosité et de température de couleur de l'écran (15) en fonction de la luminance de lumière ambiante acquise ;
déterminer si une luminosité et une température de couleur de l'écran (15) correspondent à des valeurs prédéterminées et, si tel n'est pas le cas, répéter ledit ajustement et ladite détermination jusqu'à ce que la luminosité et la température de couleur de l'écran (15) correspondent auxdites valeurs prédéterminées ;
en réponse à la détermination du fait que la luminosité et la température de couleur de l'écran (15) correspondent auxdites valeurs prédéterminées :
acquérir la luminosité globale à partir du deuxième capteur optique (40) ;
ajuster les paramètres de luminosité et de température de couleur de la lampe (20) en fonction de la luminosité globale acquise ; et
déterminer si la luminosité et la température de couleur de l'écran (15) correspondent à des valeurs prédéterminées et, si tel n'est pas le cas, répéter ledit ajustement de la lampe et ladite détermination jusqu'à ce que la luminosité et la température de couleur de l'écran (15) correspondent auxdites valeurs prédéterminées.

2. Système d'affichage (100) selon la revendication 1, **caractérisé en outre par** :
un support amovible (64) disposé en un emplacement sur le dispositif d'affichage (10) pour contenir la lampe (20) et le premier capteur optique (30), l'emplacement du premier capteur optique (30) sur le support amovible (64) n'étant pas influencé par la luminance de la lampe (20).
